Europäisches Patentamt

European Patent Office

Office européen des brevets

(19)

(11) Publication number: **0 428 389 A2**

# EUROPEAN PATENT APPLICATION

(21) Application number: 90312387.5

(51) Int. Cl.⁵: **C01B 13/14**

(22) Date of filing: **13.11.90**

(30) Priority: **13.11.89 JP 294185/89**

(43) Date of publication of application:
**22.05.91 Bulletin 91/21**

(84) Designated Contracting States:
**DE FR GB**

(71) Applicant: **SAKAI CHEMICAL INDUSTRY CO., LTD.,**
**1, Ebisujimacho 5-cho**
**Sakai Osaka(JP)**

Applicant: **DIRECTOR-GENERAL NATIONAL INSTITUTE FOR RESEARCH IN INORGANIC MATERIALS**
**1, Namiki 1-chome**
**Tsukuba, Ibaragi(JP)**

(72) Inventor: **Terada, Yasuhiko**
**8-21, Kawanishicho**
**Ashiya, Hyogo(JP)**
Inventor: **Abe, Kazunobu**
**83-4, Aobadai**
**Izumi, Osaka(JP)**
Inventor: **Uno, Hajime**
**3-9-204, Shin-Hinoodai 3-cho**
**Sakai, Osaka(JP)**
Inventor: **Shirasaki, Shinichi**
**3-610-201 Takezono**
**Tsukuba, Ibaragi(JP)**

(74) Representative: **Geering, Keith Edwin et al**
**REDDIE & GROSE 16 Theobalds Road**
**London WC1X 8PL(GB)**

(54) **Process for producing metal hydroxide sol.**

(57) A process for producing a metal hydroxide sol which comprises subjecting an aqueous solution or an alcoholic solution of a nitrate, a sulfate, a chloride organic acid salt of a metal selected from Mg, Co, Ni, Zn, Cu, Mn, Fe and Cr to anion exchange by putting the solution into contact with a strong basic anion exchange resin.

EP 0 428 389 A2

## PROCESS FOR PRODUCING METAL HYDROXIDE SOL

### BACKGROUND OF THE INVENTION

This invention relates to a process for producing a metal hydroxide sol and, more particularly, to a process for producing a metal hydroxide sol suitable for uses as a material for the production of, for example, a piezoelectric element, semiconductor, sensor, optoelectronics material, dielectric, catalyst, and the like.

Much attention has recently been paid to functional ceramics applied to a piezoelectric element, semiconductor, sensor, optoelectronics material, dielectric, and the like. A metal hydroxide sol is one of the important materials for the production of such functional ceramics.

In the production of, for example, dielectric ceramics, it is desirable to use such a high quality powder material as is easy to sinter at low temperatures and is composed of perovskite phase only of high dielectric constant. Hence it is necessary to prepare a powder material with use of a metal material which has a uniform, very small particle size and a narrow particle size distribution.

A metal hydroxide sol has hitherto been produced usually by adding all at once a precipitating agent such as an alkali to an aqueous solution of metal salts. In this method, the concentration of the metal salt becomes smaller as precipitates are formed, so that it is difficult to obtain a sol which has a uniform and very small particle size.

A further method is also known wherein an aqueous solution of metal salts and a precipitating agent such as an alkali are gradually admixed together. However, this method still fails to provide a uniform metal hydroxide sol.

A still further method called an alkoxide method is known wherein an metal alkoxide is hydrolyzed. This method provides a uniform metal hydroxide sol, but the alkoxides are expensive and this makes the method infeasible.

### DESCRIPTION OF THE INVENTION

Accordingly, it is an object of the invention to provide a process for producing a metal hydroxide sol which has a uniform and very small particle size so that it is suitable for use as a material for the production of ceramics.

In accordance with the invention, there is provided a process for producing a metal hydroxide sol which comprises subjecting an aqueous solution or an alcoholic solution of a nitrate, a sulfate, a chloride or a salt of organic acids of a metal selected from the group consisting of Mg, Co, Ni, Zn, Cu, Mn, Fe and Cr to anion exchange by putting the solution into contact with a strong basic anion exchange resin.

The nitrate usable includes, for examples, magnesium nitrate, cobalt nitrate, nickel nitrate, zinc nitrate, copper nitrate chromium nitrate, manganese nitrate and ferrous nitrate; the sulfate includes, for example, magnesium sulfate, cobalt sulfate, nickel sulfate, zinc sulfate, copper sulfate, chromium sulfate, manganese sulfate and iron sulfate; and the chloride includes, for example, magnesium chloride, cobalt chloride, nickel chloride, zinc chloride, cupric chloride, manganese chloride and ferrous chloride. There may be mentioned as the water- or alcohol-soluble organic acid salt of the metal, for example, acetates such as chromium acetate, copper acetate or maganese acetate, or oxalates such as magnesium oxalate, cobalt oxalate or nickel oxalate.

There may be used a variety of strong basic anion exchange resins, and such resins may be exemplified by Dia-Ion SA10A available from Mitsubishi Kasei, Amberlite IRA-400 available from Rohm & Haas, Dowex SBR available from Dow Chemical, Duolite A-101D available from Sumitomo Kagaku or Lewatit M-500 available from Bayer Japan. These strong basic anion exchange resins are used in accordance with ion exchange capacity of the resin and valency of metal ions of the metal compounds to be anion exchanged.

By way of example, when 0.2 mol of a metal compound is anion exchanged with Duolite A-101D having anion exchange capacity of 1.04 eq. per liter of resin, the theoretical amount of the anion exchange resin is 385 ml with respect to divalent metals ($0.2 \times 2/1.04 = 0.385$). When the metal is trivalent, the theoretical amount of the resin is 577 ml ($0.2 \times 3/1.04 = 0.577$). However, it is desirable to use an anion exchange resin in an amount about three times the theoretical amount since commercially available anion exchange resins usually contain more or less weak basic anion exchange resins. Further, it is desirable that the anion exchange between the aqueous or alcoholic solution of the metal compound and anion exchange resin is carried out under mild agitation to obtain a high exchange rate. The anion exchange usually completes within a period of 30-60 minures, and thereafter the sol is separated from the anion exchange resin.

The invention will now be set forth more specifically with reference to examples, however, the invention is not restricted thereto, and various modifications may be made thereto within the spirit and scope of the invention.

## EXAMPLE 1

An amount of 500 ml of a strong basic anion exchange resin having an ion exchange capacity of 1.04 eq. per liter of resin available from Sumitomo Kagaku as Duolite A-101D was added to 500 ml of an aqueous solution of 0.2 mol of magnesium nitrate, and then the mixture was gently stirred for 30 minutes. Thereafter, the anion exchange resin was separated from the mixture, to provide a magnesium hydroxide sol.

## EXAMPLES 2-4

Ferric nitrate (Example 2), cobalt nitrate (Example 3) and nickel nitrate (Example 4) were used, respectively, in place of magnesium nitrate, and otherwise in the same manner as in Example 1, the hydroxide sols were prepared.

Application of the metal hydroxide sol of the invention to production of ceramics will be given below.

## APPLICATION EXAMPLE 1

An amount 0.2 mol of niobium hydroxide (available from Mitsui Kinzoku Kogyo) was dispersed in 300 ml of pure water, and after adding 1 mol of concentrated hydrochloric acid thereto, 0.8 mol of hydrogen peroxide was gradually added under stirring. Then an additional amount of pure water was added to the mixture to convert niobium hydroxide into a peroxoniobium complex, thereby to provide one liter of an aqueous solution of the complex. The solution was then held at a temperature of $45°C$ for 48 hours to provide a peroxoniobic acid sol.

A 6-N ammonia water was then added dropwise to the peroxoniobic acid sol to adjust the pH to 1.5 so as to enable ultrafiltration. The particle size of the colloidal particles of the sol was 0.02 microns as measured by laser particle size analysis system LPA-3000/3100 available from Otsuka Elctronics.

The peroxoniobic acid sol was purified by passing the sol through an ultrafilter of polysulfone having a differential molecular weight of 10000 to remove impurity ions such as chloride ions therefrom.

The peroxoniobic acid sol and the magnesium hydroxide sol prepared in Example 1 were admixed together under stirring, dried by a spray drying method, and the mixture was then subjected to calcining for two hours at $650°C$ in an alumina crucible. This calcining will be refferred to as B-calcining hereinafter.

The average particle size of the B-calcined powder was 0.08 microns as measured in the same manner as hereinbefore. From X-ray analysis, the powder was found to be crystals of $MgNb_2O_6$.

Lead oxide was mixed with the B-calcined powder so as to have a composition of $Pb(Mg_{1/3}Nb_{2/3})O_3$, and the mixture was charged together with pure water into a polyamide pot containing zirconia balls of 5 mm in diameter. The pot was placed in a ball mill to wet mix the mixture for 15 hours, followed by separation of zirconia balls and drying the content. The dried powder thus obtained was calcined in an alumina crucible at $700°C$ for two hours to provide a powder material having a composition of $Pb(Mg_{0.33}Nb_{0.66})O_3$ for ceramics production. This calcining will be hereinafter referred to as P-calcining.

The perovskite ratio of the P-calcined powder was calculated by X-ray analysis. The result is shown in the table.

The P-calcined powder was wet pulverized in a ball mill for 15 hours. After drying the powder, an 8 % by weight aqueous solution of polyvinyl alcohol was added to the powder in an amount of 8 % by weight based on the powder to granulate the powder. The granules were then molded under a pressure of 1000 $Kg/cm^2$ into a green mold in the form of pellets.

The green mold was heated at $500°C$ for four hours in an electric oven to thermally decompose the polyvinyl alcohol, and then the mold was sintered at a raised temperature of $950°C$ over a period of two hours to provide sintered pellets.

The perovskite ratio of the sintered pellets was calculated by X ray analysis. The result is shown in the table.

## APPLICATION EXAMPLES 2-4

Sintered pellets of lead perovskite ceramics were produced with use of the ferric hydroxide sol prepared in Example 2 (Application Example 2), cobalt hydroxide sol prepared in Example 3 (Application Example 3) and nickel hydroxide sol prepared in Example 4 (Application Example 4) in place of the magnesium hydroxide sol, and otherwise in the same manner as in Application Example 1.

The perovskite ratio of the sintered pellets was calculated by X ray analysis. The result is shown in the table.

## COMPARATIVE APPLICATION EXAMPLE 1

Powders of magnesium oxide (available from Ube Kagaku) and the same niobium oxide as hereinbefore were admixed together so as to have a composition of $MgNb_2O_6$. The mixture was charged together with pure water into a polyamide pot containing zirconia balls of 5 mm in diameter. The pot was placed in a ball mill to wet mix the mixture for 15 hours. Thereafter, the zirconia balls were separated, and the mixture was dried and B-calcined.

The B-calcined powder was mixed with lead oxide (available from Dainippon Painting) so as to have a composition of $Pb(Mg_{1/3}Nb_{2/3})O_3$. The mixture was then subjected to the same two-stage calcination and sintering to provide a P-calcined powder and sintered pellets, respectively. The B-calcining, P-calcining and sintering were carried out for two hours at the temperatures shown in the table.

The perovskite ratios of the calcined powder and sintered pellets were calculated by X ray analysis. The results are shown in the table.

COMPARATIVE APPLICATION EXAMPLES 2-4

Ferric oxide (Comparative Application Example 2), cobalt oxide (Comparative Application Example 3) and nickel oxide (Comparative Application Example 4) were used, respectively, in place of magnesium oxide, and otherwise in a manner as in Comparative Application Example 1, powder mixtures were prepared, and subjected to two-stage calcination and sintering, to provide calcined powders and sintered pellets, respectively.

The B-calcining, P-calcining and sintering were carried out for two hours at the temperatures shown in the table.

The perovskite ratios of the calcined powders and sintered pellets thus obtained were calculated by X ray analysis. The results are shown in the table.

As shown in the table, the perovskite ratio of each sintered pellet obtained in Application Examples 1-3 was 100 %. In contrast, the perovskite ratio of each sintered pellet obtained in Comparative Application Examples 1-4 was as low as less than 100 % (96.5 to 97.5 %).

From this fact it was confirmed that all the ceramics produced using the metal hydroxide sol of the invention were composed of perovskite phase only, while the ceramics produced using the corresponding metal oxides were composed of a mixed phase of perovskite phase and pyrochlore phase.

In the above Application Examples, there was given description of lead perovskite ceramics only, however, it goes without saying that the metal hydroxide sol of the invention can be used as a metal material such as magnesium or cobalt material for the production of a variety of ceramics such as barium titanate or the like as well as lead perovskite ceramics. Further, the metal hydroxide sol of the invention is suitable for use where a high dispersibility of metal component is required.

As set forth above, according to the process of the invention, the metal hydroxide sol is obtained which is uniform in composition and very fine in particle size, and thus the sol is suitably applicable to the production of a piezoelectric element, semiconductor, sensor, optoelectronics material, dielectric, catalyst or the like where a high dispersibility of metal components such as magnesium or cobalt is required.

| | B-Calcining Temp. x Time | | Specific Surface Area of Niobate (B-Calcined Powder) | P-Calcining Temp. x Time | | Specific Surface Area of P-Calcined Powder |
|---|---|---|---|---|---|---|
| | $(°C)$ | $(hr)$ | $(m^2/g)$ | $(°C)$ | $(hr)$ | $(m^2/g)$ |
| Application Ex. 1 | 650 x 2 | | 12.9 | 700 x 2 | | 3.2 |
| Comparative Application Ex. 1 | 800 x 2 | | 4.0 | 900 x 2 | | 1.0 |
| Application Ex. 2 | 800 x 2 | | 8.6 | 700 x 2 | | 2.1 |
| Comparative Application Ex. 2 | 900 x 2 | | 2.6 | 800 x 2 | | 1.3 |
| Application Ex. 3 | 700 x 2 | | 9.7 | 800 x 2 | | 1.5 |
| Comparative Application Ex. 3 | 800 x 2 | | 1.8 | 800 x 2 | | 0.5 |
| Application Ex. 4 | 800 x 2 | | 5.5 | 800 x 2 | | 2.0 |
| Comparative Application Ex. 4 | 900 x 2 | | 0.7 | 900 x 2 | | 0.4 |

TABLE (Continued)

| | Perovskite Ratio[*] | Sintering Temp. x Time | | Perovskite Ratio of Sintered Pellets[*] |
|---|---|---|---|---|
| | (%) | (°C) | (hr) | (%) |
| Application Ex. 1 | 100 | 950 x 2 | | 100 |
| Comparative Application Ex. 1 | 90.1 | 1150 x 2 | | 96.8 |
| Application Ex. 2 | 100 | 950 x 2 | | 100 |
| Comparative Application Ex. 2 | 86.5 | 1000 x 2 | | 96.5 |
| Application Ex. 3 | 100 | 950 x 2 | | 100 |
| Comparative Application Ex. 3 | 96.1 | 1000 x 2 | | 97.2 |
| Application Ex. 4 | 100 | 950 x 2 | | 100 |
| Comparative Application Ex. 4 | 90.9 | 1050 x 2 | | 97.5 |

*) Perovskite Ratio: [I(perovskite (110))/(I(perovskite (110)+I(pyrochlore (222))] x 100

**Claims**

1. A process for producing a metal hydroxide sol which comprises subjecting an aqueous or alcoholic solution of salt selected from nitrates, sulfates, chlorides and organic acid salts of metal selected from Mg, Co, Ni, Zn, Cu, Mn, Fe and Cr to anion exchange by putting the solution into contact with strong basic anion exchange resin.

2. A process as claimed in claim 1 wherein an aqueous solution of magnesium nitrate is anion exchanged to provide a magnesium hydroxide sol.

3. A process as claimed in claim 1 wherein an aqueous solution of ferric nitrate is anion exchanged to provide a ferric hydroxide sol.

4. A process as claimed in claim 1 wherein an aqueous solution of cobalt nitrate is anion exchanged to provide a cobalt hydroxide sol.

5. A process as claimed in claim 1 wherein an aqueous solution of nickel nitrate is anion exchanged to provide a nickel hydroxide sol.